# EUROPÄISCHE PATENTSCHRIFT

(11) **EP 2 135 337 B1**
(45) Veröffentlichungstag und Bekanntmachung des Hinweises auf die Patenterteilung: **30.11.2016**
(21) Anmeldenummer: 08748871.4
(22) Anmeldetag: 04.04.2008
(51) Int. Cl.: H02B 15/00

(54) **NIEDER-, MITTEL- ODER HOCHSPANNUNGSSCHALT- ODER -STEUEREINRICHTUNG, INSBESONDERE EINE SCHALTANLAGE**
LOW-VOLTAGE, MEDIUM-VOLTAGE OR HIGH-VOLTAGE SWITCHING OR CONTROL DEVICE, IN PARTICULAR A SWITCHGEAR ASSEMBLY
DISPOSITIF DE DISTRIBUTION OU DE COMMANDE BASSE, MOYENNE OU HAUTE TENSION, NOTAMMENT INSTALLATION DE DISTRIBUTION

(30) Priorität: 05.04.2007 DE 102007016952; 03.04.2008 DE 102008017429
(43) Veröffentlichungstag der Anmeldung: 23.12.2009
(73) Patentinhaber: ABB Schweiz AG, 5400 Baden (CH)
(72) Erfinder: SCHMIDT, Karl-Michael, 47447 Moers (DE); HENKE, Ralf, 50321 Brühl (DE); WEHRMANN, Sven, 40724 Hilden (DE)
(74) Vertreter: Schmidt, Karl Michael
(86) Internationale Anmeldenummer: PCT/EP2008/002715
(87) Internationale Veröffentlichungsnummer: WO 2008/122424

(56) Entgegenhaltungen:
- DE-A1- 19 855 431
- DE-A1- 19 911 196
- DE-A1-102004 006 851
- DE-C1- 4 338 171
- DE-U1- 29 605 846
- DE-U1- 29 813 657
- GB-A- 1 108 529

## Beschreibung

Die Erfindung betrifft eine Nieder-, Mittel- oder Hochspannungsschalt- oder -steuereinrichtung, insbesondere eine Schaltanlage gemäß dem Oberbegriff des Anspruchs 1, sowie Verwendungen gemäß Patentansprüche 14, 15, 16, 17.

Schaltanlagen bilden einen der wichtigsten Bestandteile der elektrischen Energieübertragung und- Verteilung. Die vielseitigen Möglichkeiten und die komplexen Funktionen tragen einerseits zur allgemeinen Sicherheit bei und sichern andererseits die Verfügbarkeit von elektrischer Energie.

Eine klassische Mittelspannungsschaltanlage zum Beispiel besteht in Ihrem grundsätzlichen Aufbau aus einem Primär- und einem Sekundärteil. Über den Primärteil wird die elektrische Energie verteilt während der Sekundärteil die Steuerung und Überwachung der primären Schaltgeräte und Stromkreise übernimmt.

Je nach Philosophie und Anforderungsprofil des Kunden werden für die Sekundärtechnik die unterschiedlichsten Betriebsmittel eingesetzt.

Grundsätzlich unterscheidet man in der Sekundärtechnik zwischen der konventionellen und der Mikroprozessor unterstützten Anlagensteuerung.

Aus der DE 298 13 657 U1 ist eine allgemeine Stromverteilereinrichtung über Stromkabel von einem Verteilerblock zu mehreren elektrischen Modulen bekannt.

So ist ein Multifunktionsrelais bekannt, wie z. B. das REF542plus von ABB, welches die Möglichkeit der frei programmierbaren Steuerung der geforderten Funktionen und deren Zuweisung auf quasi beliebige binäre Ein- und Ausgänge bietet. Das ermöglicht dem Anlagenbauer einen hohen Grad an Standardisierung bezüglich seiner sekundärtechnischen Komponenten und deren Verdrahtung.

Der hohe Standardisierungsgrad unterstützt den Einsatz von Steckverbindern und vorkonfektionierten Kabelbäumen. Dieses trägt entscheidend zu einer hohen Verfügbarkeit der Sekundärtechnik bei. Ein weiterer Vorteil dieser Technik ergibt sich aus der Servicefreundlichkeit.

Die konventionelle Sekundärtechnik wird mit diskreten Betriebsmitteln wie Tastern, Meldeleuchten, Anzeigeinstrumenten für Strom, Spannung etc, Meßwertumformern, Schutzrelais, Hilfsrelais sowie mechanischen Hilfsschaltern ausgeführt.

Die geforderten Funktionen werden durch die Verdrahtung der einzelnen Betriebsmittel/Komponenten untereinander hergestellt. Aufgrund der Vielzahl der möglichen Funktionen und der dabei zum Einsatz kommenden Betriebsmittel ist eine standardisierte Verdrahtungsausführung scheinbar nicht möglich.

Aufgrund der unterschiedlichen Einbauorte der zahlreichen Betriebsmittel im Steuerschrank und in der Steuerschranktür ergeben sich folgende Nachteile:
- Bedingt durch die Vielzahl an Schnittstellen ist ein vermehrter Einsatz von Reihenklemmen notwendig.
- Durch die hohe Anzahl an Einbauorten und Betriebsmitteln ist der Einsatz von vorkonfektionierten Kabelbäumen kaum möglich.
- Fehlende elektrische Steckanschlüsse der Komponenten.
- Hoher Rangieraufwand zur Realisierung aller Funktionen erforderlich.
- Serviceunfreundliche Verdrahtungstechnik.

Hier gilt es nach Lösungen zu suchen, möglichst viele Vorteile der Mikroprozessor gesteuerten Technik auf die konventionelle Ausführung der Sekundärtechnik anzuwenden.

Die Schwierigkeit liegt darin, aus der scheinbar unendlich großen Menge an verschiedenen Funktionen Standards zu entwickeln, die sich auf eine große Anzahl an Schaltfeldern anwenden lassen, sprich immer wiederkehrende Funktionen werden zu einem Standard zusammengefasst. Kundenspezifische Funktionen werden nach Möglichkeit teilstandardisiert.

Aufgabe der Erfindung ist es daher, einzelne Funktionen zu einer standardisierten Einheit zusammenzufassen, ohne dabei den Weg der konventionellen Technik zu verlassen.

Die gestellte Aufgabe ist bei einer Anlage gemäß Anspruch 1 gelöst.

Weitere vorteilhafte Ausgestaltungen sind in den übrigen Ansprüchen angegeben.

Erfindungsgemäße Verwendungen sind in den Ansprüchen 14 bis 17 angegeben. Kern der Erfindung ist, dass die elektrische Verdrahtung zwischen den elektrischen Funktionskomponenten der Schaltanlage durch eine Verdrahtung in einer Box oder Platine ersetzt wird, und dass die elektrischen Komponenten jeweils nur noch mit einem gebundenen Kabelstrang direkt an die Box angeschlossen sind.

Um hierbei eine von dort vorzunehmende finale Applizierung der Funktion der Schaltanlage vorzunehmen ist weiterhin angegeben, dass die Anschlüsse der elektrischen Komponenten direkt mit einer ersten Anschlussleiste verbunden sind , und dass die erste Anschlussleite mit einer zweiten Anschlussleiste verbunden oder mit einer weiteren Anschlusseite versehen ist, an oder in welche ein Kodierstecker einbringbar ist, auf dem mittels Schaltelemente die gewünschte funktionsbestimmende Verdrahtung bzw Kontaktierung physisch vornehmbar ist.

In weiterer vorteilhafter Ausgestaltung ist vorgesehen, dass die Anschlüsse der elektrischen Komponenten direkt mit einer Anschlussleiste verbunden sind, welche eine äußere Anschlussseite zur Aufnahme eines Kodiersteckers aufweist, auf dem mittel Schalt-, oder Brückenelementen die gewünschte funktionsbestimmende Verdrahtung bzw Kontaktierung physisch vornehmbar ist.

In weiterer vorteilhafter Ausgestaltung ist vorgesehen, dass der Kodierstecker mechanische Schaltelemente enthält, beispielsweise in Form von elektrisch leitenden Brücken.

In weiterer vorteilhafter Ausgestaltung ist vorgesehen,dass der Kodierstecker elektrisch oder elektronisch ansteuerbare Schaltelemente enthält. Bei dieser Ausgestaltungsvarianten besteht die Möglichkeit den Kodierstecker in einer vollelektronischen Version zu gestalten. Dabei werden in diesem Ausführungsbeispiel die elektrischen Verbindungen nicht wie im erstgenannten Ausführungsbeispiel durch mechanisch einzuführende Schalt- oder Brückenelemente vorgenommen, sondern elektrische Verbindungen werden über elektronisch angesteuerte und im elektronischen Kodierstecker implementierte Schaltelemente vorgenommen. Der Kodierstecker wird dann zum Einstellen einer Funktionsapplikation bspw über ein Buskabel angesteuert.

In weiterer vorteilhafter Ausgestaltung ist vorgesehen, dass die Anschlussleiste bzw die Box in einer Gehäuse- oder Türöffnung der Schaltanlage derart angeordnet ist, dass sie durch dieselbe hindurchreicht und somit auch von außen zugänglich ist.

In weiterer vorteilhafter Ausgestaltung ist vorgesehen,dass die Anschlussleiste bzw die Box im Inneren des Schaltschrankes angeordnet ist.

In weiterer vorteilhafter Ausgestaltung ist vorgesehen, dass die elektrischen Kontakte der äußeren Anschlussseite der Anschlussleiste in 2-dimensionaler Matrixstruktur angelegt sind.

In weiterer vorteilhafter Ausgestaltung ist vorgesehen,dass die Anschlussleiste bzw die äußere Anschlussleiste mehrschichtig aufgebaut ist, und dass sich daher die elektrischen Kontakte in der Anschlussleiste in 3-dimensionaler Matrixstruktur verteilen.

In weiterer vorteilhafter Ausgestaltung ist vorgesehen, dass die mechanischen elektrischen Schalt- oder Brückenelemente als elektrisch leitende Brücken ausgebildet sind, welche geradlinig in die Matrix-Kontaktstruktur einbringbar sind.

In weiterer vorteilhafter Ausgestaltung ist vorgesehen, dass die mechanischen elektrischen Schalt- oder Brückenelemente diagonal in die Matrixstruktur einbringbar sind.

In weiterer vorteilhafter Ausgestaltung ist vorgesehen, dass die elektrischen Brücken Kontaktstifte enthalten, welche in die mehrschichtige 3-dimensional verteilten Kontaktebenen der Anschlussleiste von der Anschlussseite her einsteckbar sind, und dass die Kontaktstifte aus elektrisch leitenden und aus elektrisch nicht leitenden Kontaktstift-Abschnitten bestehen.

In weiterer vorteilhafter Ausgestaltung ist vorgesehen, dass die leitenden und nicht leitenden Abschnitte des Kontaktstiftes vereinzelbar sind, derart, dass eine frei wählbare Folge von elektrisch leitenden und elektrisch nicht leitenden Abschnitten zusammensteckbar ist, bevor der Kontaktstift in die Anschlussleiste einsteckbar ist.

Hinsichtlich einer Verwendung der erfindungsgemäßen Anlage ist vorgesehen, diese als Schaltanlage für die Ansteuerung der Komponenten einer Niederspannungsschaltanlage einzusetzen.

Eine weitere Verwendung ist als Schaltanlage für die Ansteuerung der Komponenten einer Mittelspannungsschaltanlage.

Eine weitere Verwendung ist als Schaltanlage für die Ansteuerung der Komponenten einer Hochspannungsschaltanlage.

Eine weitere, ebenso vorteilhafte Verwendung ist die als Schaltanlage für die Steuerung der Komponenten einer Einrichtung aus der Automatisierungstechnik, nämlich
einer Gas- oder Flüssigkeits-Analyseeinrichtung,
einer Durchflußmesseinrichtung,
einer Sensoreinrichtung,
einer Prozessventilsteuereinrichtung.

Ausgestaltungen der Erfindung sind in der Zeichnung angegeben.

Es zeigt:
- Figur 1:: Schaltschrank mit integrierter Box
- Figur 2:: erste und zweite Anschlussleiste
- Figur 3:: schematische Verschaltung
- Figur 4:: 2-dimensionale Matrixstruktur der Anschlussseite der Anschlussleiste oder des Kodiersteckers
- Figur 5:: Kontaktpin

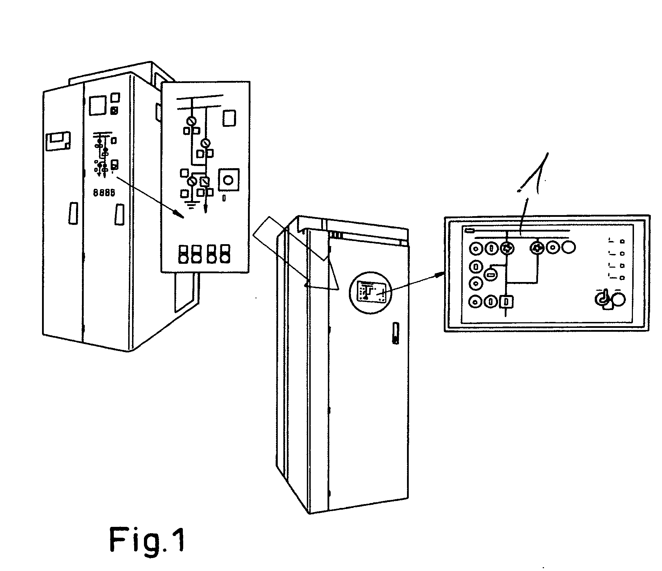

Zu Figur 1:
Für die konventionelle Steuerung beispielsweise einer Doppelsammelschienenanlage werden in der Schaltschranktür bis zu 18 Schaltgeräte verbaut. Als konfektionierter als Baustein für die Steuerung konventioneller Felder wird die als Box 1 integrierte Einheit eingesetzt. Die Box 1 ist eine in einem einzigen Gehäuse integrierte Steuer-, Melde-, und Anzeigeeinheit, die die komplette bisherige konventionelle Steuerung eines Schaltfeldes ersetzt. Dazu wurde die bisherige konventionelle Steuerung ohne Verwendung aktiver Bauelemente eins zu eins umgesetzt.

Bei dieser innovativen Lösung kommen nun auch, wie bei der mikroprozessorgesteuerten Ausführung Steckverbinder und vorkonfektionierte Kabelbäume in der Türverdrahtung zum Einsatz. Kundenspezifische Funktionen wie Alarmmeldungen und deren technische Ausführung z.B. Arbeits- oder Ruhestromprinzip, Quittierbarkeit können weiterhin individuell ausgeführt und geändert werden, ohne die Box 1 als solche bautechnisch zu verändern. Die Hardware bleibt immer die gleiche. Lediglich die eingesetzten elektrischen Brückenelemente gemäß nachfolgenden Figuren legen letztendlich die Funktion fest.

Die Standardisierung der Verdrahtung im Steuerschrank stellt im Stand der Technik eine noch größere Herausforderung dar. Aufgrund der zahlreichen Betriebsmittel im Steuerschrank ist ein aufwendiges Rangieren bzw. Querverdrahten der einzelnen Leitungen trotz Optimierung der Verdrahtungsreihenfolge durch das CAD System zunächst nicht zu vermeiden.

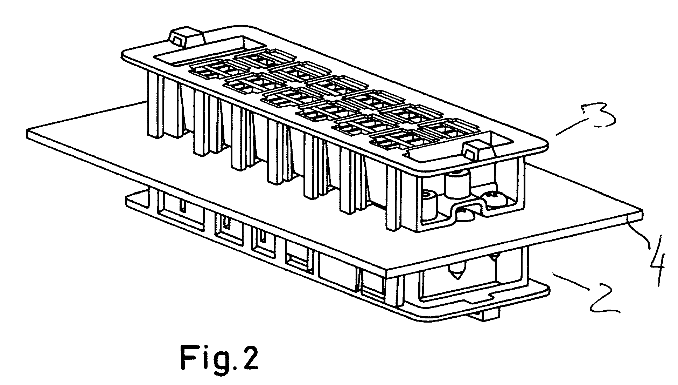

Um den eigentlichen Verdrahtungsaufwand auf die kundenspezifischen Funktionen zu beschränken, ist die besagte Box 1 entwickelt, siehe Figur 2, die alle standardmäßigen Rangierungen innerhalb des Schaltfeldes in nur einer einzigen Einheit beinhaltet und über Steckverbinder mit allen Komponenten verbunden wird.
Reihenklemmen kommen nur noch für die kundenspezifischen Funktionen zum Einsatz. Durch den Wegfall der übrigen Reihenklemmen und den kompakten Abmessungen der Box wird der Platzbedarf deutlich reduziert. Die Box wird als vorkonfektionierte fertig geprüfte Einheit verbaut.
Optional können auch kundenspezifische Funktionen in der Box integriert werden.

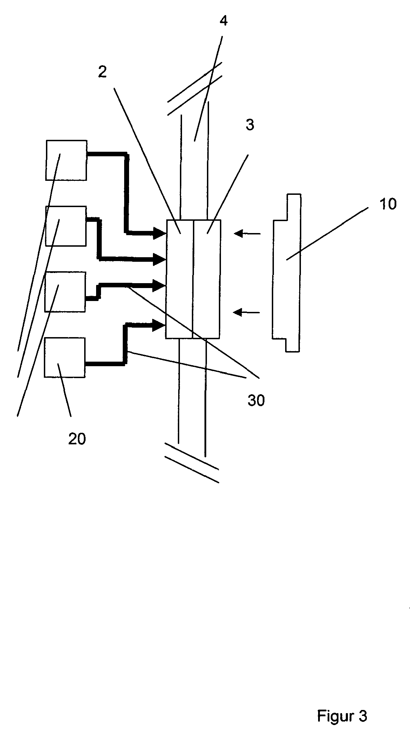

Eine weitere Variante betrifft eine besondere Ausgestaltung der Klemmleiste für eine Schaltanlage. Diese ist in Figur 3 dargestellt.

Die als Arbeitsprojekt bezeichnete Box 1 gemäß obiger Ausführung weist eine erste Anschlussleiste 2 auf, an der alle im Schaltschrank oder im Schaltfeld zu steuernden Einzelkomponenten 20 mit jeweils einem mit Stecker verbundenen Kabelbaum anzuschließen sind. Die Anschlussleiste 2, auch als Box 1 bezeichnet oder ausführbar ist oder dieselbe enthält, enthält dabei die konfektionierte Verdrahtung. Damit entfällt die eigentliche direkte "fliegende" Verdrahtung im Schaltschrank selbst, wie schon oben ausgeführt.

Diese an sich vorteilhafte Vorgehensweise legt aber die Funktionen mit der Klemmleistenverdrahtung physisch fest.

Diese an sich schon vorteilhafte Vorgehensweise wird durch eine im Aufwand noch weiter reduzierte Vorgehensweise ersetzt, deren gewählte Schaltfunktionen außerdem leicht zu verändern sind.

Mit der erfindungsgemäßen Lösung wird nun ein Konfektionier- oder Kodierstecker 10 auf die Anschlussseite der Anschlussleiste 3 gesteckt, welche in die standardisiert hergestellten Schaltanlage nun die jeweils gewünschten Schaltfunktionen implementiert.

Dabei kann bereits auch schon die Anschlussleiste 2 eine Anschlussseite 3 mit enthalten, auf welche der Kodierstecker 10 aufsteckbar ist.

Der Kodierstecker 10 kann auch mit physischen Funktionsschaltern oder Kontaktbrücken 5 bestückt sein, der die funktionsentsprechenden elektrischen Brücken erstellt oder trennt, oder der Kodierstecker kann elektronisch ausgeführt und angesteuert werden, bspw über ein Buskabel, so dass die letztendlich implementierte Funktion auch von außerhalb, bzw über eine Ferneinstellung vorgenommen werden kann.

Ferner können die Anschlussleisten auch zweiteilig und durch das Gehäuse hindurch angelegt sein, so dass die Stecker mit den Kabelbäumen 30 zu den Einzelkomponenten 20 innerhalb des Schaltschranks auf dem inneren Klemmleistenteil angeschlossen sind, während die andere damit verschaltete Klemmleiste außen am Gehäuse angeordnet ist. An der äußeren Anschlussleiste 3 kann dann der Kodierstecker 10 eingesteckt werden.

### Vorteile:

Die Schaltanlagen können uniform gefertigt werden. Die jeweiligen Schaltfunktionen können dabei einfach über den jeweilig eingestellten Kodierstecker gewählt werden. Daraus folgt eine vereinfachte preiswertere uniforme Fertigung.
Durch die Option des elektronischen Kodiersteckers ist die Schaltanlage fernsteuerbar, fernüberwachbar, und im Fehlerfall sogar ferndiagnostizierbar.

Die in Figur 3 dargestellte Ausführungsform betrifft nur die Variante mit der Klemmleiste durch die Gehäuse- oder Türwandung. Möglich ist dabei auch eine gehäuseinterne Anordnung und Befestigung der Klemmleiste(n).

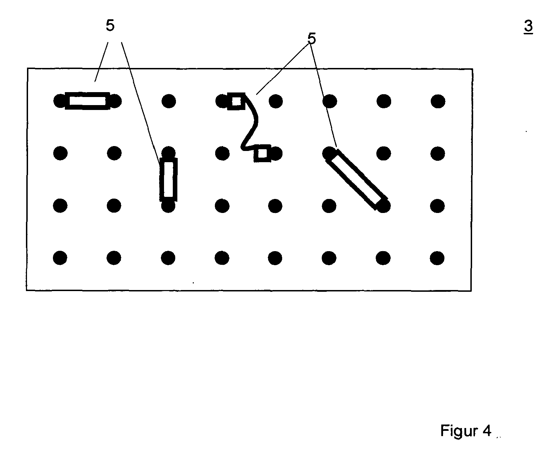

Figur 4 zeigt eine schematische Darstellung der Anschlussseite 3 bzw die Anschlusseite des Kodiersteckers 10. Die Punkte stellen die einzelnen Kontaktstellen des Kodiersteckers 10 dar. Nun können hierbei gerade verlaufenden elektrisch leitenden Kontaktbrücken 5 in x- und y- Ausrichtung verteilt aufgesteckt werden, wodurch sich letztendlich die Interkonnexion der einzelnen elektrischen Komponenten 20 der Schaltanlage ergibt.

Ferner können die Kontaktbrücken 5 aber auch als Diagonalbrücken, d.h. als diagonal verlaufende Kontaktbrücken einzelne Kontaktstellen somit auch diagonal miteinander verbinden. Üblich sind lediglich Brücken in x- oder y-Richtung.
Eine deutlich höhere Flexibilität entsteht aber mit Hilfe dieser Diagonalbrücken.
Die geradlinigen Brücken sowie die Diagonalbrücken können dann entweder als starre Brückenelemente mit zwei Kontaktpins und starrer Verbindung zwischen beiden ausgeführt sein, oder aber mit zwei Kontaktpins mit flexibler Verbindung, bspw mit flexiblem Kabel ausgeführt sein.

Die hier dargestelle Anschlussseite, oder die Kontaktseite des Kodiersteckers 10 ist 2-dimensional ausgeführt. Die Anschlussseite bzw der Kodierstecker kann aber auch in 3-dimensionaler Verteilung regelmäßig angeordnete Kontaktstellen haben. D.h. der Kodierstecker weist dann mehrere übereinander geschichtete jeweils 2-dimensionale Kontaktebenen, so dass sich so die 3-dimensionale Verteilung der Kontaktpunkte ergibt.

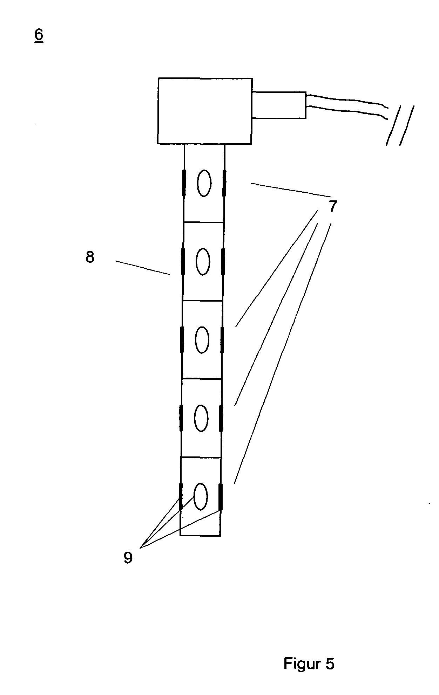

Figur 5 zeigt in Bezug auf die 3-dimensionale Ausführung der Kontaktierung entsprechende Kontaktpins 6, mit denen die Kontaktbrücken 5 dann für die besagte 3-dimensionale elektische Verschaltung oder Brückung versehen sind.

Hierzu ist der Kontaktpin 6 mit elektrisch leitenden und elektrisch nicht leitenden isolierenden Abschnitten 7 bzw 8 versehen. In einer besonderen Ausgestaltung sind diese Abschnitte sogar vereinzelbar, so dass ein jeweils individuleller Kontaktpin aus einer veränderbaren, bzw frei wählbaren Abfolge von elektrisch isolierenden und elektrisch leitenden Abschnitte 7, 8 zusammensteckbar ist. So kann bei uniformer Gestaltung eines 3-dimensionalen Kodiersteckers 10 oder einer 3-dimensional ausgelegten Anschlussseite der Anschlussleiste auch die jeweilige in die z-Dimension hineingelegte vorbestimmte Kontaktierung erfolgen.

Zur besseren Kontaktierung sind die Abschnitte 7 und 8 noch allseitig mit verdickten Anformungen 9 versehen, die die elektrischen Kontakte mit möglichst kleinem elektrischen Übergangswiderstand herstellen sollen.

### Bezugszeichenliste

- 1: Box in Schaltschrank einer Mittelspannungsschaltanlage, d.h. in Schaltschranktür
- 2: Erste Anschlussleiste
- 3: Zweite Anschlussleiste mit 2-dimensionaler Anschlussseite in Matrixform (ggfs aber auch mit 3 dimensional geschichteten Anschlussebenen.
- 4: Wandung der Schaltschranktür
- 5: Kontaktbrücken
- 6: Kontaktpin
- 7: Elektrisch leitender Abschnitt
- 8: Elektrisch isolierender Abschnitt
- 9: Kontaktanformung
- 10: Kodierstecker
- 20: Elektrische Komponenten
- 30: Kabelbaum, Kabelstrang

## Patentansprüche

1. Nieder-, Mittel- oder Hochspannungsschaltanlage mit einzelnen zu steuernden Funktionskomponenten, wobei die elektrische Verdrahtung zwischen den elektrischen Funktionskomponenten der Schaltanlage durch eine Verdrahtung in einer Box (1) ersetzt wird, und wobei die elektrischen Komponenten (20) jeweils nur noch mit einem gebundenen Kabelstrang (30) direkt an die Box (1) angeschlossen sind, **dadurch gekennzeichnet,**
**dass** die Box (1) ein in einem einzigen Gehäuse integrierte Steuer-, Melde- und Anzeigeeinheit ist, und dass die Box eine Anschlussleiste (2) enthält, an der alle im Schaltschrank oder im Schaltfeld zu steuernden Einzelkomponenten (20) mit jeweils einem mit Stecker verbundenen Kabelbaum anzuschließen sind, und dass an der Schlussleiste ein Kodierstecker einbringbar ist, auf dem mittels Schaltelemente (5, 6) die gewünschte funktionsbestimmende Verdrahtung bzw Kontaktierung physisch vornehmbar ist.

2. Nieder-, Mittel- oder Hochspannungsschaltanlage nach Anspruch 1
**dadurch gekennzeichnet,**
**dass** die Anschlüsse der elektrischen Komponenten direkt mit einer ersten Anschlussleiste (2) verbunden sind , und dass die erste Anschlussleite (2) mit einer zweiten Anschlussleiste (3) verbunden oder mit einer weiteren Anschlusseite versehen ist, an oder in welche der Kodierstecker (10) einbringbar ist, auf dem mittels Schaltelemente (5, 6) die gewünschte funktionsbestimmende Verdrahtung bzw Kontaktierung physisch vornehmbar ist.

3. Nieder-, Mittel- oder Hochspannungsschaltanlage nach Anspruch 1
**dadurch gekennzeichnet,**
**dass** die Anschlüsse der elektrischen Komponenten (20) direkt mit einer Anschlussleiste (2) verbunden sind, welche eine äußere Anschlussseite zur Aufnahme des Kodiersteckers (10) aufweist, auf dem mittels Schalt-, oder Brückenelementen (5, 6) die gewünschte funktionsbestimmende Verdrahtung bzw Kontaktierung physisch vornehmbar ist.

4. Schaltanlage nach Anspruch 1, 2 oder 3
**dadurch gekennzeichnet,**
**dass** der Kodierstecker (10) mechanische Schaltelemente enthält, beispielsweise in Form von elektrisch leitenden Brücken (5, 6).

5. Schaltanlage nach Anspruch 1, 2 oder 3,
**dadurch gekennzeichnet,**
**dass** der Kodierstecker (10) elektrisch oder elektronisch ansteuerbare Schaltelemente enthält, die signaltechnisch ggfs mit einem Buskabel verbunden sind

6. Schaltanlage nach einem der vorhergehenden Ansprüche,
**dadurch gekennzeichnet,**
**dass** die Anschlussleiste (2) bzw (3) bzw die Box (1) in einer Gehäuse- oder Türöffnung der Schaltanlage derart angeordnet ist, dass sie durch dieselbe hindurchreicht und somit auch von außen zugänglich ist.

7. Schaltanlage nach einem der vorhergehenden Ansprüche,
**dadurch gekennzeichnet,**
**dass** die Anschlussleiste (2) bzw (3) bzw die Box (1) im Inneren des Schaltschrankes angeordnet ist.

8. Schaltanlage nach einem der vorhergehenden Ansprüche,
**dadurch gekennzeichnet,**
**dass** die elektrischen Kontakte der äußeren Anschlusseite der Anschlussleiste in 2-dimensionaler Matrixstruktur angelegt sind.

9. Schaltanlage nach Anspruch 8,
**dadurch gekennzeichnet,**
**dass** die Anschlussleiste (2) bzw die äußere Anschlussleiste (3) mehrschichtig aufgebaut ist, und dass sich die elektrischen Kontakte in der Anschlussleiste in dreidimensionaler Matrixstruktur verteilen.

10. Schaltanlage nach Anspruch 8 oder 9,
**dadurch gekennzeichnet,**
**dass** die mechanischen elektrischen Schalt- oder Brückenelemente als elektrisch leitende Brückenelemente (5) ausgebildet sind, welche geradlinig in die Matrix-Kontaktstruktur einbringbar sind.

11. Schaltanlage nach Anspruch 8 oder 9,
**dadurch gekennzeichnet,**
**dass** die mechanischen elektrischen Schalt- oder Brückenelemente (5) diagonal in die Matrixstruktur einbringbar sind.

12. Schaltanlage nach Anspruch 10 oder 11,
**dadurch gekennzeichnet,**
**dass** die elektrischen Brückenelemente Kontaktstifte (6) enthalten, welche in die mehrschichtige 3-dimensional verteilten Kontaktebenen der Anschlussleiste (2) bzw (3) von der Anschlussseite her einsteckbar sind, und dass die Kontaktstifte (6) aus elektrisch leitenden und aus elektrisch nicht leitenden Kontaktstift-Abschnitten (7, 8) besteht.

13. Schaltanlage nach Anspruch 12,
**dadurch gekennzeichnet,**
**dass** die leitenden und nicht leitenden Abschnitte (7, 8) des Kontaktstiftes (6) vereinzelbar sind, derart, dass eine frei wählbare Folge von elektrisch leitenden und elektrisch nicht leitenden Abschnitten zusammensteckbar ist, bevor der Kontaktstift in die Anschlussleiste einsteckbar ist.

14. Verwendung einer Schaltanlage nach einem oder mehreren der Ansprüche 1 bis 13 als Schaltanlage für die Ansteuerung der Komponenten einer Niederspannungsschaltanlage.

15. Verwendung einer Schaltanlage nach einem oder mehreren der Ansprüche 1 bis 13 als Schaltanlage für die Ansteuerung der Komponenten einer Mittelspannungsschaltanlage.

16. Verwendung einer Schaltanlage nach einem oder mehreren der Ansprüche 1 bis 13 als Schaltanlage für die Ansteuerung der Komponenten einer Hochspannungsschaltanlage.

17. Verwendung einer Schaltanlage nach einem oder mehreren der Ansprüche 1 bis 13 als Schaltanlage für die Steuerung der Komponenten einer Einrichtung aus der Automatisierungstechnik, nämlich
einer Gas- oder Flüssigkeits-Analyseeinrichtung,
einer Durchflußmesseinrichtung,
einer Sensoreinrichtung,
einer Prozessventilsteuereinrichtung.

## Claims

1. Low-voltage, medium-voltage or high-voltage switchgear assembly having individual functional components to be controlled, wherein the electrical wiring between the electrical functional components of the switchgear assembly is replaced by wiring in a box (1), and wherein the electrical components (20) are each now connected directly to the box (1) only by means of a bound cable run (30), **characterized in that** the box (1) is a control, signalling and display unit integrated in a single housing, and **in that** the box comprises a connecting strip (2) to which all of the individual components (20) to be controlled in the switchgear cabinet or in the switch panel can be connected by means of in each case one cable harness, which is connected to a plug, and **in that** a coding plug can be fitted to the connecting strip, on which plug the desired function-determining wiring or contacts can be physically implemented by means of switching elements (5, 6).

2. Low-voltage, medium-voltage or high-voltage switchgear assembly according to Claim 1, **characterized in that** the connections of the electrical components are connected directly to a first connecting strip (2), and **in that** the first connecting strip (2) is connected to a second connecting strip (3) or is provided with a further connection face, to or into which the coding plug (10) can be fitted, on which the desired function-determining wiring or contacts can be physically implemented by means of switching elements (5, 6).

3. Low-voltage, medium-voltage or high-voltage switchgear assembly according to Claim 1, **characterized in that** the connections of the electrical components (20) are connected directly to a connecting strip (2) which has an outer connection face for holding the coding plug (10), on which the desired function-determining wiring or contacts can be physically implemented by means of switching or linking elements (5, 6).

4. Switchgear assembly according to Claim 1, 2 or 3, **characterized in that** the coding plug (10) contains mechanical switching elements, for example in the form of electrically conductive links (5, 6).

5. Switchgear assembly according to Claim 1, 2 or 3, **characterized in that** the coding plug (10) contains switching elements which can be operated electrically or electronically and may be connected for signalling purposes to a bus cable.

6. Switchgear assembly according to one of the preceding claims, **characterized in that** the connecting strip (2) or (3) or the box (1) is arranged in a housing opening or door opening of the switchgear assembly such that it passes through the latter and is thus accessible from the outside as well.

7. Switchgear assembly according to one of the preceding claims, **characterized in that** the connecting strip (2) or (3) or the box (1) is arranged in the interior of the switchgear cabinet.

8. Switchgear assembly according to one of the preceding claims, **characterized in that** the electrical contacts or the outer connection face of the connecting strip are designed using a two-dimensional matrix structure.

9. Switchgear assembly according to Claim 8, **characterized in that** the connecting strip (2) or the outer connecting strip (3) is formed from a plurality of layers, and **in that** the electrical contacts in the connecting strip are distributed using a three-dimensional matrix structure.

10. Switchgear assembly according to Claim 8 or 9, **characterized in that** the mechanical electrical switching or linking elements are in the form of electrically conductive linking elements (5) which can be fitted into the matrix contact structure in a straight line.

11. Switchgear assembly according to Claim 8 or 9, **characterized in that** the mechanical electrical switching or linking elements (5) can be fitted into the matrix structure diagonally.

12. Switchgear assembly according to Claim 10 or 11, **characterized in that** the electrical linking elements contain contact pins (6) which can be inserted into the multilayer three-dimensionally distributed contact levels of the respective connecting strip (2) or (3) from the connection face, and **in that** the contact pins (6) comprise electrically conductive and electrically non-conductive contact pin sections (7, 8).

13. Switchgear assembly according to Claim 12, **characterized in that** the conductive and non-conductive sections (7, 8) of the contact pin (6) can be separated such that a freely variable sequence of electrically conductive and electrically non-conductive sections can be plugged together before the contact pin can be inserted into the connecting strip.

14. Use of a switchgear assembly according to one or more of Claims 1 to 13 as a switchgear assembly for operation of the components of a low-voltage switchgear assembly.

15. Use of a switchgear assembly according to one or more of Claims 1 to 13 as a switchgear assembly for operation of the components of a medium-voltage switchgear assembly.

16. Use of a switchgear assembly according to one or more of Claims 1 to 13 as a switchgear assembly for operation of the components of a high-voltage switchgear assembly.

17. Use of a switchgear assembly according to one or more of Claims 1 to 13 as a switchgear assembly for control of the components of a device for automation purposes, specifically
a gas or liquid analysis device,
a flow measurement device,
a sensor device,
a process valve control device.

## Revendications

1. Appareillage de commutation de basse, moyenne ou haute tension, comprenant des composants fonctionnels à commander individuellement,
le câblage électrique entre les composants fonctionnels électriques de l'appareillage de commutation étant remplacé par un câblage dans un coffret (1) et
les composants électriques (20) étant raccordés directement au coffret (1) à chaque fois uniquement par un faisceau de câbles (30) lié, **caractérisé en ce que** le coffret (1) est une unité de commande, de signalisation et d'affichage intégrée dans un boîtier unique, et **en ce que** le coffret contient une barre de raccordement (2) à laquelle doivent être raccordés tous les composants individuels (20) à commander dans l'armoire électrique ou dans le tableau de distribution, respectivement avec un faisceau de câbles relié à une fiche, et **en ce qu'**une fiche de codage peut être insérée dans la barre de raccordement, sur laquelle le câblage ou la mise en contact déterminant la fonction souhaitée peut être réalisé physiquement au moyen d'éléments de commutation (5, 6).

2. Appareillage de commutation de basse, moyenne ou haute tension selon la revendication 1, **caractérisé en ce que** les bornes des composants électriques sont reliées directement à une première barre de raccordement (2), et **en ce que** la première barre de raccordement (2) est reliée à une deuxième barre de raccordement (3) ou est pourvue d'un côté de raccordement supplémentaire sur ou dans lequel la fiche de codage (10) est insérable, sur laquelle le câblage ou la mise en contact déterminant la fonction souhaitée peut être réalisé(e) physiquement au moyen d'éléments de commutation (5, 6).

3. Appareillage de commutation de basse, moyenne ou haute tension selon la revendication 1, **caractérisé en ce que** les bornes des composants électriques (20) sont reliées directement à une barre de raccordement (2), laquelle possède un côté de raccordement extérieur destiné à accueillir la fiche de codage (10), sur laquelle le câblage ou la mise en contact déterminant la fonction souhaitée peut être réalisé physiquement au moyen d'éléments de commutation ou de pontage (5, 6).

4. Appareillage de commutation selon la revendication 1, 2 ou 3, **caractérisé en ce que** la fiche de codage (10) contient des éléments de commutation mécaniques, par exemple sous la forme de cavaliers (5, 6) électriquement conducteurs.

5. Appareillage de commutation selon la revendication 1, 2 ou 3, **caractérisé en ce que** la fiche de codage (10) contient des éléments de commutation pouvant être commandés de manière électrique ou électronique, lesquels sont éventuellement reliés en signalisation avec un câble de bus.

6. Appareillage de commutation selon l'une des revendications précédentes, **caractérisé en ce que** la barre de raccordement (2) ou (3) ou le coffret (1) sont disposés dans une ouverture de boîtier ou de porte de l'appareillage de commutation de telle sorte qu'ils passent à travers celle-ci et sont ainsi également accessibles depuis l'extérieur.

7. Appareillage de commutation selon l'une des revendications précédentes, **caractérisé en ce que** la barre de raccordement (2) ou (3) ou le coffret (1) sont disposés à l'intérieur de l'armoire électrique.

8. Appareillage de commutation selon l'une des revendications précédentes, **caractérisé en ce que** les contacts électriques du côté de raccordement extérieur de la barre de raccordement sont posés en une structure matricielle à 2 dimensions.

9. Appareillage de commutation selon la revendication 8, **caractérisé en ce que** la barre de raccordement (2) ou la barre de raccordement extérieure (3) sont constituées de plusieurs couches, et **en ce que** les contacts électriques dans la barre de raccordement sont distribués dans une structure matricielle tridimensionnelle.

10. Appareillage de commutation selon la revendication 8 ou 9, **caractérisé en ce que** les éléments mécaniques électriques de commutation ou de pontage sont réalisés sous la forme d'éléments de pontage (5) électriquement conducteurs qui peuvent être introduits en ligne droite dans la structure de contact matricielle.

11. Appareillage de commutation selon la revendication 8 ou 9, **caractérisé en ce que** les éléments mécaniques de commutation ou de pontage (5) peuvent être introduits en diagonale dans la structure matricielle.

12. Appareillage de commutation selon la revendication 10 ou 11, **caractérisé en ce que** les éléments de pontage électriques contiennent des broches de contact (6) qui peuvent être insérées dans les plans de contact distribués en 3 dimensions sur plusieurs couches de la barre de raccordement (2) ou (3) depuis le côté de raccordement, et **en ce que** les broches de contact (6) se composent en portions de broche de contact (7, 8) électriquement conductrices et non électriquement conductrices.

13. Appareillage de commutation selon la revendication 12, **caractérisé en ce que** les portions (7, 8) conductrices et non conductrices de la broche de contact (6) peuvent être dépariées de telle sorte qu'une séquence pouvant être choisie librement de portions électriquement conductrices et non électriquement conductrices peut être assemblée par emboîtement avant que la broche de contact puisse être insérée dans la barre de raccordement.

14. Utilisation d'un appareillage de commutation selon une ou plusieurs des revendications 1 à 13 comme un appareillage de commutation servant à la commande des composants d'un appareillage de commutation de basse tension.

15. Utilisation d'un appareillage de commutation selon une ou plusieurs des revendications 1 à 13 comme un appareillage de commutation servant à la commande des composants d'un appareillage de commutation de moyenne tension.

16. Utilisation d'un appareillage de commutation selon une ou plusieurs des revendications 1 à 13 comme un appareillage de commutation servant à la commande des composants d'un appareillage de commutation de haute tension.

17. Utilisation d'un appareillage de commutation selon une ou plusieurs des revendications 1 à 13 comme un appareillage de commutation pour la commande des composants d'un dispositif d'automatisme, notamment un dispositif d'analyse de gaz ou de liquide, un dispositif de mesure de débit, un dispositif de détection, un dispositif de commande de vanne de procédé.
